(19)

Europäisches
Patentamt

European
Patent Office

Office européen
des brevets

(11) **EP 4 424 529 A1**

(12) **EUROPEAN PATENT APPLICATION**

(43) Date of publication:
**04.09.2024  Bulletin 2024/36**

(21) Application number: **24155735.4**

(22) Date of filing: **05.02.2024**

(51) International Patent Classification (IPC):
**B60C 23/06** $^{(2006.01)}$

(52) Cooperative Patent Classification (CPC):
**B60C 23/061**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.02.2023  JP 2023029334**

(71) Applicant: **Sumitomo Rubber Industries, Ltd.
Kobe-shi, Hyogo 651-0072 (JP)**

(72) Inventors:
- **SEKOGUCHI, Kazuki
  Kobe-shi, 651-0072 (JP)**
- **MASUDA, Hidetaka
  Kobe-shi, 651-0072 (JP)**

(74) Representative: **TBK
Bavariaring 4-6
80336 München (DE)**

(54) **APPARATUS FOR DETECTING DECREASED PRESSURE OF TIRE**

(57)   An apparatus for detecting decreased pressure of tire includes a speed acquisition unit, an outside air temperature acquisition unit, a decreased pressure index calculation unit, a correction unit, and a decreased pressure determination unit. The speed acquisition unit acquires rotation speeds of a plurality of tires mounted to a vehicle. The outside air temperature acquisition unit acquires an external temperature around the vehicle. The decreased pressure index calculation unit calculates at least one decreased pressure index as an index for comparing the rotation speeds of the plurality of tires. The correction unit calculates a corrected decreased pressure index corrected in consideration of influence of the external temperature, or calculates a corrected decreased pressure threshold value corrected in consideration of influence of the external temperature. The decreased pressure determination unit determines whether or not at least one tire among the plurality of tires has a decreased pressure.

EP 4 424 529 A1

**Description**

FIELD OF INVENTION

The present invention relates to an apparatus for detecting decreased pressure of tire mounted on a wheel, a method for detecting decreased pressure, and a program for detecting decreased pressure.

BACKGROUND

In order to cause a vehicle to travel comfortably, it is important for air pressures of tires to be adjusted. This is because when the air pressure falls below a proper value, it can cause a problem that ride comfort and fuel efficiency become poor. In view of this, conventionally, a system that automatically detects a decreased pressure of a tire (Tire Pressure Monitoring System; TPMS) has been under study. Information that the tire has a decreased pressure can be used, for example, to alert a driver.

As a system of detecting a decreased pressure of a tire, in addition to a system of directly measuring the air pressure of the tire by, for example, mounting a pressure sensor to the tire, there is a system of indirectly evaluating the decreased pressure of the tire by using other indexes. As an example of such a system, there is known a dynamic loaded radius (DLR) system. The DLR system uses a phenomenon that a tire with a decreased pressure has a decreased dynamic loaded radius due to the tire being squashed when traveling, and therefore rotates at a higher speed, and the DLR system estimates the decreased pressure of the tire from the rotation speed of the tire (JP 2020-011651A, for example).

JP 2020-011651A discloses a correction apparatus that uses the DLR system, and mentions three indexes referred to as DEL 1 to DEL 3 as decreased pressure indexes for evaluating a decreased pressure in the DLR system. In JP 2020-011651A, DEL 1 to DEL 3 are defined as follows. Note that V1 to V4 are rotation speeds of the left front wheel tire, the right front wheel tire, the left rear wheel tire, and the right rear wheel tire, respectively.

$$\text{DEL } 1 = \{(V1 + V4)/(V2 + V3) - 1\} \times 100 \ (\%)$$

$$\text{DEL } 2 = \{(V1 + V2)/(V3 + V4) - 1\} \times 100 \ (\%)$$

$$\text{DEL } 3 = \{(V1 + V3)/(V2 + V4) - 1\} \times 100 \ (\%)$$

When a tire has a decreased pressure, the rotation speed increases, and therefore the decreased pressure indexes, such as DEL 1 to DEL 3, also change. Accordingly, by setting decreased pressure index values when the pressure has decreased by a decreased pressure rate being a detection target as threshold values (decreased pressure threshold values), it becomes possible to detect a decreased pressure.

The above-mentioned decreased pressure threshold values are often set based on data acquired from test runs of the vehicle. However, according to examination of the inventors of the present invention, a correlation between a decreased pressure rate (%) of a tire and a decreased pressure index value of the above-mentioned decreased pressure index at that time changes under influence of an outside air temperature (that is, external temperature around the vehicle). In other words, the above-mentioned decreased pressure threshold value is set based on the decreased pressure index value calculated under a condition of a certain external temperature, but the external temperature at the time of detection of a decreased pressure of a tire may vary. Accordingly, depending on the external temperature at the time of detection of a decreased pressure, the preset decreased pressure threshold value does not necessarily correspond to a predetermined decreased pressure rate, and hence there is a fear that a decreased pressure cannot be detected appropriately. This point is not taken into consideration in JP 2020-011651A.

SUMMARY of INVENTION

The present invention has an object to provide an apparatus for detecting decreased pressure of tire, a method for detecting decreased pressure, and a program for detecting decreased pressure, which are capable of correcting influence of an outside air temperature and appropriately detecting a decreased pressure of a tire.

An apparatus for detecting decreased pressure of tire according to a first aspect of the present invention includes a speed acquisition unit, an outside air temperature acquisition unit, a decreased pressure index calculation unit, a correction unit, and a decreased pressure determination unit. The speed acquisition unit is configured to acquire rotation speeds of a plurality of tires mounted to a vehicle. The outside air temperature acquisition unit is configured to acquire an external temperature around the vehicle. The decreased pressure index calculation unit is configured to calculate at least one decreased pressure index as an index for comparing the rotation speeds of the plurality of tires based on the rotation speeds. The correction unit is configured to calculate a corrected decreased pressure index corrected in consideration of influence of the external temperature based on the acquired external temperature and the calculated decreased pressure index, or calculate a corrected decreased pressure threshold value corrected in consideration of influence of the external temperature based on the acquired external temperature and a decreased pressure threshold value preset in accordance with the decreased pressure index for detecting pressure decrease. The decreased pressure determination unit is configured to determine whether or not at least one tire among the plurality of tires has a decreased pressure based on the corrected decreased pressure index and the preset decreased pressure threshold value, or determine whether or not at least one tire among the plurality of tires has a decreased pressure based on the calculated decreased pressure index and the corrected decreased pressure threshold value.

An apparatus for detecting decreased pressure of tire according to a second aspect is the apparatus for detecting decreased pressure according to the first aspect, wherein based on a coefficient representing a relation between a decreased pressure rate of the tire and the decreased pressure index under a condition of a reference external temperature serving as reference, the correction unit specifies a coefficient representing the relation under a condition of the acquired external temperature.

An apparatus for detecting decreased pressure of tire according to a third aspect is the apparatus for detecting decreased pressure according to the first aspect or the second aspect, wherein the coefficient representing the relation between the decreased pressure rate of the tire and the decreased pressure index is a slope of a straight line in which the decreased pressure index is an objective variable and the decreased pressure rate of the tire is an explanatory variable.

An apparatus for detecting decreased pressure of tire according to a fourth aspect is the apparatus for detecting decreased pressure according to the third aspect, wherein the correction unit calculates the corrected decreased pressure index based on a ratio between the slope under the condition of the reference external temperature and the slope under the condition of the acquired external temperature.

An apparatus for detecting decreased pressure of tire according to a fifth aspect is the apparatus for detecting decreased pressure according to any one of the first aspect to the fourth aspect, further including a decreased pressure alert unit configured to generate a decreased pressure alert when the decreased pressure determination unit has determined that the at least one tire has a decreased pressure.

A method for detecting decreased pressure of tire according to a sixth aspect is a method for detecting decreased pressure of tire to be executed by one or a plurality of computers, and includes the following. Further, a program for detecting decreased pressure of tire according to a seventh aspect causes one or a plurality of computers to execute the following:

(1) acquiring rotation speeds of a plurality of tires mounted to a vehicle;
(2) acquiring an external temperature around the vehicle;
(3) calculating at least one decreased pressure index as an index for comparing the rotation speeds of the plurality of tires based on the rotation speeds;
(4) calculating a corrected decreased pressure index corrected in consideration of influence of the external temperature based on the acquired external temperature and the calculated decreased pressure index, or calculating a corrected decreased pressure threshold value corrected in consideration of influence of the external temperature based on the acquired external temperature and a decreased pressure threshold value preset in accordance with the decreased pressure index for detecting pressure decrease; and
(5) determining whether or not at least one tire among the plurality of tires has a decreased pressure based on the corrected decreased pressure index and the preset decreased pressure threshold value, or determining whether or not at least one tire among the plurality of tires has a decreased pressure based on the calculated decreased pressure index and the corrected decreased pressure threshold value.

According to the present invention, through correction of influence of an outside air temperature on the decreased pressure index, a decreased pressure of a tire can be appropriately detected.

BRIEF DESCRIPTION OF DRAWINGS

FIG. 1 is a schematic diagram illustrating an apparatus for detecting decreased pressure according to one embodiment of the present invention being mounted to a vehicle.
FIG. 2 is a block diagram illustrating an electrical configuration of the apparatus for detecting decreased pressure.

FIG. 3 is a flowchart illustrating a flow of a decreased pressure detecting process.

FIG. 4 is a diagram illustrating correlations between regions and positions with decreased pressures in a plot plane of a decreased pressure index.

FIG. 5 is a diagram illustrating correlations between regions and positions with decreased pressures in the plot plane of the decreased pressure index.

FIG. 6 is a graph showing a relation between a decreased pressure rate and the decreased pressure index.

FIG. 7 is a graph showing temperature dependence of the relation between the decreased pressure rate and the decreased pressure index.

FIG. 8 is a graph showing a relation between an external temperature and decreased pressure sensitivity.

DETAILED DESCRIPTION OF THE PREFERRED EMBODIMENTS

Hereinafter, an apparatus for detecting decreased pressure, a method for detecting decreased pressure, and a program for detecting decreased pressure according to an embodiment of the present invention are described with reference to the drawings.

<1. Configuration of Apparatus for Detecting Decreased Pressure>

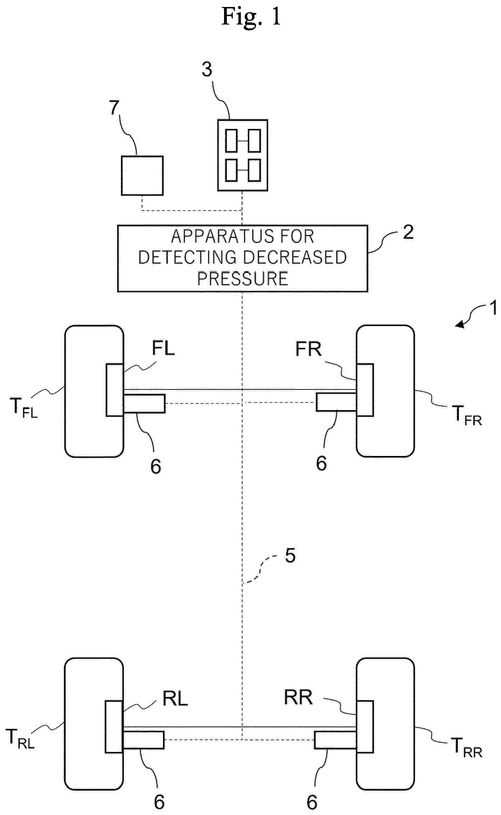

FIG. 1 is a schematic diagram illustrating an apparatus 2 for detecting decreased pressure according to the present embodiment being mounted to a vehicle 1. The vehicle 1 is a four-wheeled vehicle, and is provided with a left front wheel FL, a right front wheel FR, a left rear wheel RL, and a right rear wheel RR. The apparatus 2 for detecting decreased pressure has a function of detecting a decreased pressure of at least one of tires $T_{FL}$, $T_{FR}$, $T_{RL}$, $T_{RR}$ mounted to the wheels. When a decreased pressure of the tires $T_{FL}$, $T_{FR}$, $T_{RL}$, $T_{RR}$ is detected, the apparatus 2 for detecting decreased pressure issues an alert of the fact via an alert indicator 3 mounted on the vehicle 1. The flow of such a decreased pressure detecting process is described in detail below.

Pressure-decreased states of the tires $T_{FL}$, $T_{FR}$, $T_{RL}$, $T_{RR}$ are detected based on wheel speed (rotation speeds of the tires $T_{FL}$, $T_{FR}$, $T_{RL}$, $T_{RR}$) of the left front wheel FL, the right front wheel FR, the left rear wheel RL, and the right rear wheel RR. A wheel speed sensor 6 is mounted to each of the left front wheel FL, the right front wheel FR, the left rear wheel RL, and the right rear wheel RR, and the wheel speed sensors 6 detect signals (which indicate the rotation speeds of the tires $T_{FL}$, $T_{FR}$, $T_{RL}$, $T_{RR}$, and therefore, hereinafter sometimes referred to as rotation speed signals) indicating the wheel speeds of the wheels to which the wheel speed sensors 6 are mounted, respectively. The wheel speed sensors 6 are connected to the apparatus 2 for detecting decreased pressure via a communication line 5. The rotation speed signals detected by the wheel speed sensors 6 are transmitted to the apparatus 2 for detecting decreased pressure in real time via the communication line 5.

As the wheel speed sensors 6, anything that can detect the wheel speeds of the wheels FL, FR, RL, RR during traveling can be used. For example, a type of sensor that measures a wheel speed from an output signal of an electromagnetic pickup can be used, or a type of sensor that generates electricity using rotation like a dynamo and measures a wheel speed from a voltage at this time can also be used. A mounting position of the wheel speed sensor 6 is not particularly limited, and can be selected as appropriate according to the type of sensor insofar as the wheel speed can be detected.

Further, an outside air temperature sensor 7 is also mounted to the vehicle 1 according to the present embodiment. The outside air temperature sensor 7 is a temperature sensor that detects an air temperature (external temperature) of an environment external to the vehicle 1, and is connected to the apparatus 2 for detecting decreased pressure via the communication line 5. The external temperature detected by the outside air temperature sensor 7 is transmitted to the apparatus 2 for detecting decreased pressure in real time via the communication line 5.

As the outside air temperature sensor 7, anything that can detect the external temperature around the vehicle 1 during traveling can be used. A mounting position of the outside air temperature sensor 7 is not particularly limited insofar as the outside air temperature sensor 7 is not affected in the vehicle 1 by heat generation of an engine, a motor, and the like.

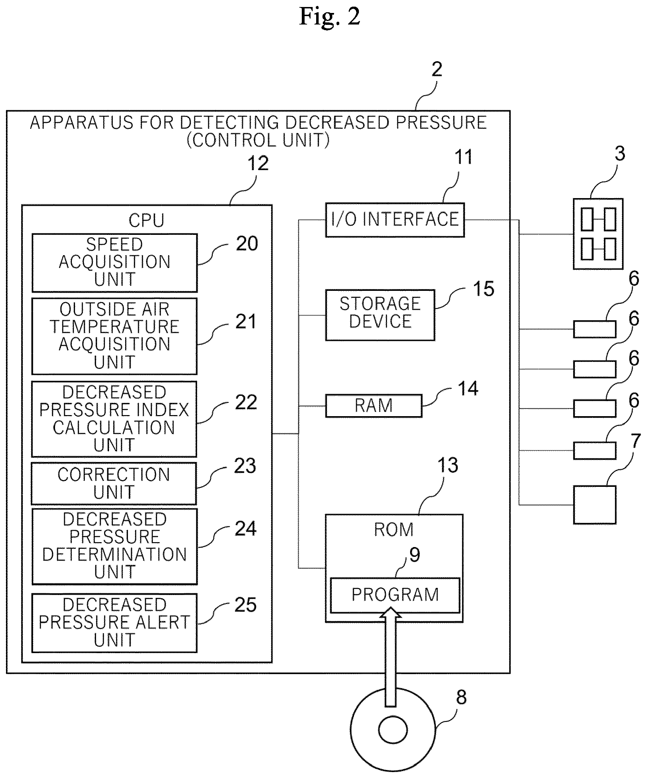

FIG. 2 is a block diagram illustrating an electrical configuration of the apparatus 2 for detecting decreased pressure. The apparatus 2 for detecting decreased pressure as a hardware is a control unit (on-vehicle computer) mounted on the vehicle 1, and as illustrated in FIG. 2, includes an I/O interface 11, a CPU 12, a ROM 13, a RAM 14, and a storage device 15 that is non-volatile and rewritable. The I/O interface 11 is a communication device for realizing communication with external devices such as the wheel speed sensors 6, the outside air temperature sensor 7, and the alert indicator 3. The ROM 13 stores a program 9 for controlling operations of respective units of the vehicle 1. The program 9 is written into the ROM 13 from a storage medium 8 such as a CD-ROM. The CPU 12 reads out the program 9 from the ROM 13 and executes the program 9, thereby virtually operating as a speed acquisition unit 20, an outside air temperature acquisition unit 21, a decreased pressure index calculation unit 22, a correction unit 23, a decreased pressure determination unit 24, and a decreased pressure alert unit 25. The operations of the respective units 20 to 25 are described in detail below. The storage device 15 is constituted of a hard disk, a flash memory, and the like. A storage place for the program 9 need not be the ROM 13, and may be the storage device 15. The RAM 14 and the storage device 15 are used as appropriate for computation of the CPU 12.

The alert indicator 3 can be realized in any form, such as a liquid crystal display element or a liquid crystal monitor, insofar as the fact of a tire having a decreased pressure can be informed to a user. While the alert indicator 3 can also be mounted to a position selected as appropriate, it is preferred that the alert indicator 3 be provided at a position, for example, on an instrument panel, which is easily noticeable by a driver. When the control unit (apparatus 2 for detecting decreased pressure) is connected to a car navigation system, a monitor for the car navigation can be used as the alert indicator 3. When a monitor is used as the alert indicator 3, an icon or character information displayed on the monitor can serve as an alert.

<2. Decreased Pressure Detecting Process>

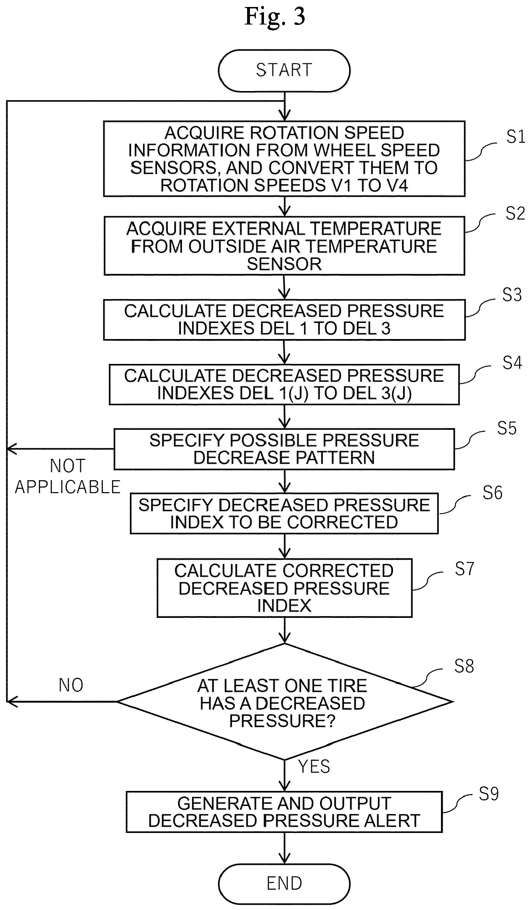

Hereinafter, with reference to FIG. 3, a decreased pressure detecting process for detecting a decreased pressure of at least one of the tires $T_{FL}$, $T_{FR}$, $T_{RL}$, $T_{RR}$ is described. The decreased pressure detecting process illustrated in FIG. 3 uses a dynamic loaded radius (DLR) system, and detects a decreased pressure of at least one of the tires through use of at least one decreased pressure index, and a decreased pressure threshold value preset in accordance with this decreased pressure index. For example, the decreased pressure detecting process illustrated in FIG. 3 starts when the vehicle 1 starts traveling, and ends when the traveling stops.

First, the speed acquisition unit 20 acquires rotation speed signals from the respective wheel speed sensors 6 mounted to the wheels FL, FR, RL, RR. The speed acquisition unit 20 converts the acquired rotation speed signals to rotation speeds V1 to V4 of the tires $T_{FL}$, $T_{FR}$, $T_{RL}$, $T_{RR}$, respectively (Step S1). The speed acquisition unit 20 stores the converted rotation speeds V1 to V4 in the RAM 14 or the storage device 15.

Subsequently, the outside air temperature acquisition unit 21 receives the signals from the outside air temperature sensor 7, and acquires an external temperature T around the vehicle 1 (Step S2). The outside air temperature acquisition unit 21 stores the acquired external temperature T in the RAM 14 or the storage device 15 in association with the rotation speeds V1 to V4 converted from the rotation speed signals acquired at the same or approximately the same time.

Subsequently, the decreased pressure index calculation unit 22 calculates decreased pressure indexes based on the rotation speeds V1 to V4 (Step S3). The decreased pressure indexes in the present embodiment are indexes DEL 1 to DEL 3 for comparing the rotation speeds of the respective tires as defined by Expression (1) to Expression (3) below.

$$\text{DEL } 1 = \{(V1+V4)/(V2+V3) - 1\} \times 100 \ (\%) \tag{1}$$

$$\text{DEL } 2 = \{(V1+V2)/(V3+V4) - 1\} \times 100 \ (\%) \tag{2}$$

$$\text{DEL } 3 = \{(V1+V3)/(V2+V4) - 1\} \times 100 \ (\%) \tag{3}$$

As expressed by the above expressions, the decreased pressure index DEL 1 in the present embodiment is an index for comparing average rotation speeds between a pair of the tire $T_{FL}$ and the tire $T_{RR}$ and a pair of the tire $T_{FR}$ and the tire $T_{RL}$. The decreased pressure index DEL 2 is an index for comparing average rotation speeds between a pair of the tire $T_{FL}$ and the tire $T_{FR}$ and a pair of the tire $T_{RL}$ and the tire $T_{RR}$. The decreased pressure index DEL 3 is an index for comparing average rotation speeds between a pair of the tire $T_{FL}$ and the tire $T_{RL}$ and a pair of the tire $T_{FR}$ and the tire $T_{RR}$. In other words, the decreased pressure index DEL 1 is an index for comparing average rotation speeds between a pair of tires located on diagonally opposite side of the vehicle 1, the decreased pressure index DEL 2 is an index for comparing average rotation speeds between a pair of tires located on front and rear sides of the vehicle, and the decreased pressure index DEL 3 is an index for comparing average rotation speeds between a pair of tires located on right and left sides of the vehicle.

The decreased pressure indexes DEL 1 to DEL 3 may take on a non-zero inherent value even when none of the tires of the wheels has a decreased pressure. This is due to individual differences among the tires $T_{FL}$, $T_{FR}$, $T_{RL}$, $T_{RR}$, load distribution inherent in the vehicle 1, and the like. Therefore, in the present embodiment, decreased pressures of the tires are detected based on indexes DEL 1(J) to DEL 3(J) that indicate how much absolute values of the decreased pressure indexes DEL 1 to DEL 3 deviate from reference indexes DEL 1(R) to DEL 3(R) for the decreased pressure indexes DEL 1 to DEL 3, respectively. The reference indexes DEL 1(R) to DEL 3(R) can be, for example, values of the decreased pressure indexes DEL 1 to DEL 3 under conditions in which all the tires $T_{FL}$, $T_{FR}$, $T_{RL}$, $T_{RR}$ have normal internal pressures and one driver of standard weight is in the vehicle 1. Each of the reference indexes DEL 1(R) to DEL 3(R) is specified in advance, and is stored in advance in the ROM 13 or the storage device 15.

The decreased pressure index calculation unit 22 calculates the indexes DEL 1(J) to DEL 3(J) based on the reference indexes DEL 1(R) to DEL 3(R) in accordance with the following expressions (Step S4), respectively. Hereinafter, the indexes DEL 1(J) to DEL 3(J) are also referred to as "decreased pressure indexes".

$$DEL\ 1(J) = DEL\ 1 - DEL\ 1(R)$$

$$DEL\ 2(J) = DEL\ 2 - DEL\ 2(R)$$

$$DEL\ 3(J) = DEL\ 3 - DEL\ 3(R)$$

Subsequently, the decreased pressure index calculation unit 22 specifies a possible pressure decrease pattern based on values of the indexes DEL 1(J) to DEL 3(J) (Step S5). This process is executed to specify a combination patten of the number of the tires, which may have decreased pressures, and wheel positions, and this process is different from determination of whether or not pressure decrease occurs. The decreased pressure index calculation unit 22 determines that each of the indexes DEL 1(J) to DEL 3(J) has a value larger than a positive threshold value (+), a value around 0 (0), or a value smaller than a negative threshold value (-). Based on a combination of determination of these indexes, a possible pressure decrease pattern of the tires is specified. As shown in Table 1, combinations of determination of the indexes DEL 1(J) to DEL 3(J) correspond to fourteen pressure decrease patterns. The threshold values described herein are convenient threshold values for determining signs of the indexes DEL 1(J) to DEL 3(J) and are set irrespective of a decreased pressure threshold value to be described later. Further, when the decreased pressure index calculation unit 22 determines that all the indexes DEL 1(J) to DEL 3(J) have values around 0, it is estimated that a possibility of occurrence of pressure decrease is low. Thus, this determination does not correspond to the pressure decrease patterns shown in Table 1, and the process from Step S 1 is executed again.

[Table 1]

|  | Position of Pressure Decrease | DEL1(J) | DEL2(J) | DEL3(J) |
|---|---|---|---|---|
| 1 | FL | + | + | + |
| 2 | FR | - | + | - |
| 3 | RL | - | - | + |
| 4 | RR | + | - | - |
| 5 | FL, FR | 0 | + | 0 |
| 6 | FL, RL | 0 | 0 | + |
| 7 | FL, RR | + | 0 | 0 |
| 8 | FR, RL | - | 0 | 0 |
| 9 | FR, RR | 0 | 0 | - |
| 10 | RL, RR | 0 | - | 0 |
| 11 | FL, FR, RL | - | + | + |
| 12 | FL, RL, RR | + | - | + |
| 13 | FL, FR, RR | + | + | - |
| 14 | FR, RL, RR | - | - | - |

Next, in accordance with the pressure decrease pattern specified in Step S5, the correction unit 23 specifies, among the decreased pressure indexes DEL 1(J) to DEL 3(J), a decreased pressure index to be corrected (Step S6).

When the pressure decrease pattern is specified in advance in Step S5, determination of whether or not pressure decrease corresponding to the specified pattern occurs can be executed through comparison between any of corrected decreased pressure indexes DEL 1'(J) to DEL 3'(J), which are corrected in consideration of influence of the external temperature, and a preset decreased pressure threshold value. Specifically, in accordance with the pattens of No. 1 to No. 14 specified in Step S5, combinations between a corrected decreased pressure index for determining whether or not pressure decrease occurs in the same pattern, and a decreased pressure threshold value associated with the corrected decreased pressure index are preset as shown in Table 2 below. In decreased pressure determination to be described later, the corrected decreased pressure index specified in accordance with Table 2 is calculated, and based on this index and the decreased pressure threshold value associated with the corrected decreased pressure index, it is determined whether or not pressure decrease corresponding to any of the patterns of No. 1 to No. 14 occurs.

[Table 2]

| Pattern | Corrected decreased pressure index | Decreased pressure index |
|---|---|---|
| 1 | DEL1(J)' | Th10 |
| 2 | | |
| 3 | | |
| 4 | | |
| 5 | DEL2(J)' | Th21 |
| 6 | DEL3(J)' | Th31 |
| 7 | DEL1(J)' | Th11 |
| 8 | DEL1(J)' | Th11 |
| 9 | DEL3(J)' | Th31 |
| 10 | DEL2(J)' | Th21 |
| 11 | DEL1(J)' | Th10 |
| 12 | | |
| 13 | | |
| 14 | | |

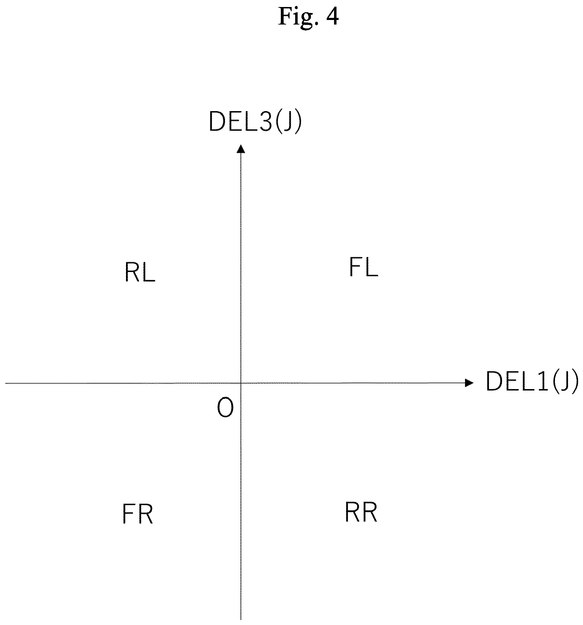

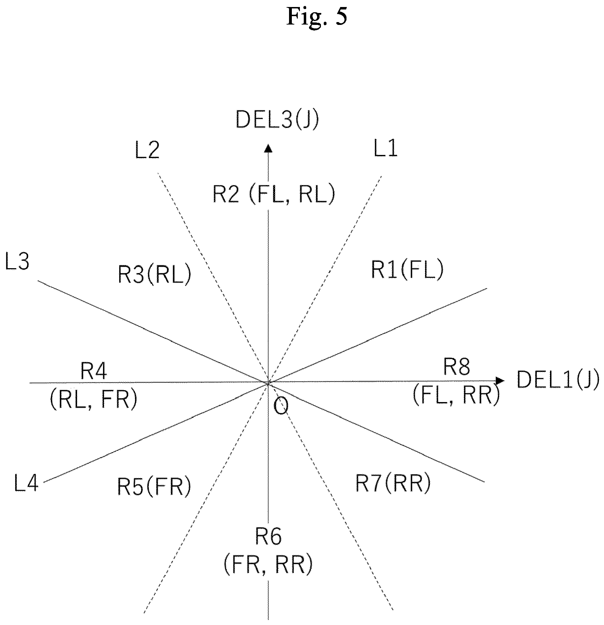

The reason why the combinations between the corrected decreased pressure index and the decreased pressure threshold value can be set in accordance with the pressure decrease patterns, and a method for calculating the corrected decreased pressure index are described below. First, when defining a plot plane with the index DEL 1(J) as a first axis and the index DEL 3(J) as a second axis, plot points of {DEL 1(J), DEL 3(J)} are distributed in a first quadrant to a fourth quadrant of the plot plane in accordance with a position of the tire having a decreased pressure. The first quadrant corresponds to the pressure decrease pattern including pressure decrease of the tire $T_{FL}$. The second quadrant corresponds to the pressure decrease pattern including pressure decrease of the tire $T_{RL}$. The third quadrant corresponds to the pressure decrease pattern including pressure decrease of the tire $T_{FR}$. The fourth quadrant corresponds to the pressure decrease pattern including pressure decrease of the tire $T_{RR}$ (see FIG. 4). More specifically, the above-mentioned plot plane is divided into regions R1 to R8 of FIG. 5 that respectively correspond to one-wheel pressure decrease patterns (No. 1 to No. 4 of Table 1) and two-wheel pressure decrease patterns (No. 6 to No. 8 of Table 1). The regions R1 to R8 are regions partitioned by straight lines L1 to L4 each passing through the origin.

However, the plot points in the pattern (No. 5 of Table 1) in which the tire $T_{FL}$ and the tire $T_{FR}$ have decreased pressures of the same degree, and the plot points in the pattern (No. 10 of Table 1) in which the tire $T_{RL}$ and the tire $T_{RR}$ have decreased pressures of the same degree are distributed near the origin of the above-mentioned plot plane, and hence the pattens described above cannot be distinguished from a case in which a pressure does not decrease. Thus, when further defining a plot space with the index DEL 2(J) as a third axis, a positive (+) side of the third axis corresponds to two-wheel pressure decrease of the tire $T_{FL}$ and the tire $T_{FR}$, and a negative (-) side of the third axis corresponds to two-wheel pressure decrease of the tire $T_{RL}$ and the tire $T_{RR}$. In other words, based on the value of the index DEL 2(J), pressure decrease of the front wheel tires, pressure decrease of the rear wheel tires, and a case of no pressure decrease are further distinguished. Further, in the above-mentioned plot plane, the patterns (No. 11 to No. 14 of Table 1) in which the tires of three wheels have decreased pressures of the same degree correspond to the regions R3, R1, R7, R5, respectively. Although these regions are also regions corresponding to one-wheel pressure decrease (No. 3, No. 1, No. 4, and No. 2 of Table 1), one-wheel pressure decrease and three-wheel pressure decrease can be distinguished from each other in the plot space based on a difference of the signs of the index DEL 2(J).

When a predetermined decreased pressure rate $R_0$ (%) is set as a detection target, based on an absolute value (abs{DEL 1(J)}) that is an absolute value of DEL 1(J) when a pressure of one tire has decreased by $R_0$ (%), a decreased pressure threshold value Th10 for one-wheel pressure decrease detection can be set with respect to abs{DEL 1(J)}. Similarly, based on an absolute value (abs{DEL 1(J)}) of DEL 1(J) when pressures of both of the tire $T_{FL}$ and the tire $T_{RR}$, or both of the tire $T_{FR}$ and the tire $T_{RL}$ have decreased by $R_0$ (%), a decreased pressure threshold value Th11 for two-wheel pressure decrease detection (No. 7 and No. 8 of Table 1) can be set with respect to abs{DEL 1(J)}. The value of abs{DEL 1(J)}, which is an absolute value of DEL 1(J) when the decreased pressure rates of both of the tire $T_{FL}$ and the tire $T_{RR}$ are R, or when the decreased pressure rates of both of the tire $T_{FR}$ and the tire $T_{RL}$ are R, is about double the value of abs{DEL 1(J)} when the decreased pressure rate (%) of one tire is R. The value of abs{DEL 1(J)} when the pressure of the tire $T_{RL}$ or the tire $T_{FR}$ has decreased by R (%) may be strictly different from the value of abs{DEL 1(J)} when the pressure of the tire $T_{FL}$ or the tire $T_{RR}$ has decreased by R (%). However, the difference between these values is extremely small and has negligible effect on decreased pressure detection in practical use, and hence the decreased pressure threshold value Th10 can be applied uniformly to detection of one-wheel pressure decrease. The same holds true for the decreased pressure threshold value Th11 for two-wheel pressure decrease detection.

Moreover, the value of abs{DEL 1(J)} when the decreased pressure rates of all of three tires are R is close to the value of abs{DEL 1(J)} when the decreased pressure rate of one tire is R. Accordingly, the decreased pressure threshold value Th10 can be set to also serve as the decreased pressure threshold value for three-wheel pressure decrease detection.

Similarly, based on an absolute value (abs{DEL 2(J)}) of DEL 2(J) when pressures of both of the tire $T_{FL}$ and the tire $T_{FR}$ have decreased by $R_0$ (%), or when pressures of both of the tire $T_{RL}$ and the tire $T_{RR}$ have decreased by $R_0$ (%), a decreased pressure threshold value Th21 for two-wheel pressure decrease detection (No. 5 and No. 10 of Table 1) can be set with respect to abs{DEL 2(J)}. The value of abs{DEL 2(J)} when pressures of both of the tire $T_{FL}$ and the tire $T_{FR}$ have decreased by R (%) may be strictly different from the value of abs{DEL 2(J)} when pressures of both of the tire $T_{RL}$ and the tire $T_{RR}$ have decreased by R (%). However, the difference between these values is extremely small and has negligible effect on decreased pressure detection, and hence the decreased pressure threshold value Th21 can be applied uniformly to both of the pressure decrease patterns shown in No. 5 and No. 10 of Table 1.

Similarly, based on an absolute value (abs{DEL 3(J)}) of DEL 3(J) when pressures of both of the tire $T_{FL}$ and the tire $T_{RL}$ have decreased by $R_0$ (%), or when pressures of both of the tire $T_{FR}$ and the tire $T_{RR}$ have decreased by $R_0$ (%), a decreased pressure threshold value Th31 for two-wheel pressure decrease detection (No. 6 and No. 9 of Table 1) can be set with respect to abs{DEL 3(J)}. The value of abs{DEL 3(J)} when pressures of both of the tire $T_{FL}$ and the tire $T_{RL}$ have decreased by R (%) may be strictly different from the value of abs{DEL 3(J)} when pressures of both of the tire $T_{FR}$ and the tire $T_{RR}$ have decreased by R (%). However, the difference between these values is extremely small and has negligible effect on decreased pressure detection, and hence the decreased pressure threshold value Th31 can be applied uniformly to both of the pressure decrease patterns shown in No. 6 and No. 9 of Table 1.

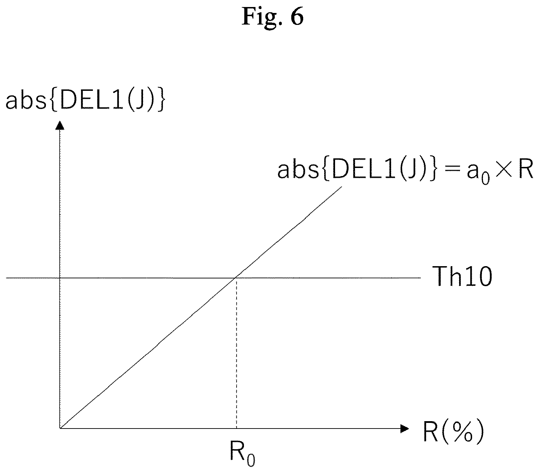

Hereinafter, the absolute values (abs{DEL 1(J)}) to (abs{DEL 3(J)}) are also referred to as "decreased pressure indexes". FIG. 6 is a graph showing a relation between the decreased pressure rate R (%) of one tire or three tires and the decreased pressure index value of abs{DEL 1(J)}. According to the examination of the inventors of the present invention, as shown in FIG. 6, under a condition in which the external temperature is constant, it can be said that the decreased pressure rate R (%) of the tire and the absolute value (abs{DEL 1(J)}) have a proportional relation. Accordingly, the absolute value (abs{DEL 1(J)}) can be expressed by the following linear equation (4), where the absolute value (abs{DEL1(J)}) is an objective variable and the decreased pressure rate R is an explanatory variable.

$$\mathrm{abs\{DEL\ 1(J)\}} = a_0 \times R \qquad\qquad (4)$$

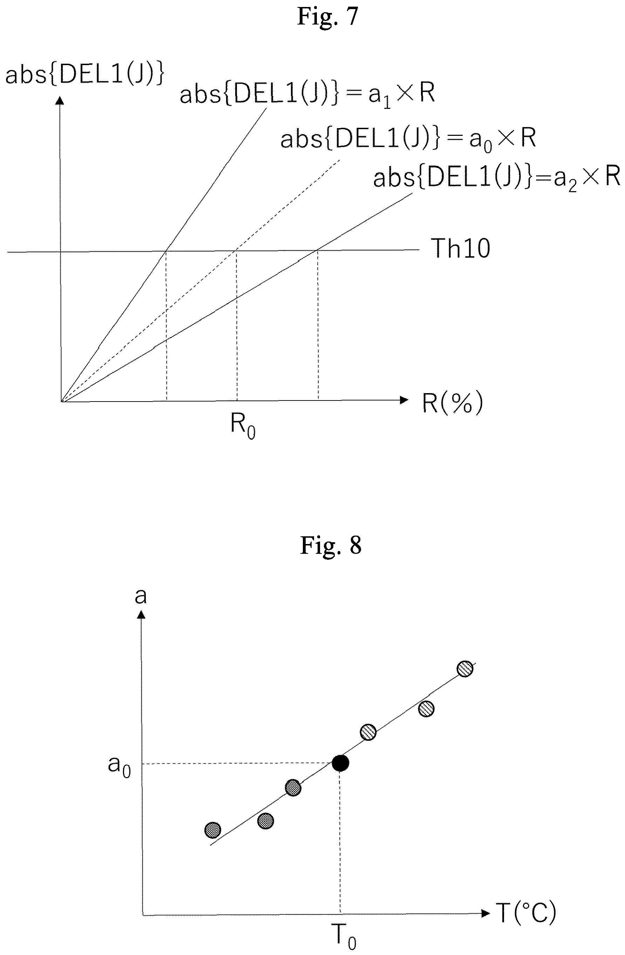

From above description, when the value of abs{DEL 1(J)} exceeds the decreased pressure threshold value Th10, it can be determined that one-wheel pressure decrease or three-wheel pressure decrease occurs. However, according to the examination of the inventors of the present invention, the above-mentioned proportional relation changes under influence of the external temperature. More specifically, assuming that $a_0$ represents a coefficient (slope) representing the proportional relation between the decreased pressure index (abs{DEL 1(J)}) and the decreased pressure rate R under a condition in which the external temperature is $T_0$ (°C), a coefficient (slope) representing the above-mentioned proportional relation when the external temperature is $T_1$ (°C) has a value of $a_1$ larger than $a_0$ (provided that $T_1 > T_0$). In this case, as shown in FIG. 7, a value of the decreased pressure index (abs{DEL 1(J)}) reaches the decreased pressure threshold value Th10 before the decreased pressure rate R of the tire reaches the detection target $R_0$. In other words, decreased pressure alert is output even though the pressure of the tire has not actually decreased to the detection target. Meanwhile, a coefficient (slope) representing the above-mentioned proportional relation when the external temperature is $T_2$ (°C) has a value of $a_2$ smaller than $a_0$ (provided that $T_0 > T_2$). In this case, as shown in FIG. 7, a value of the decreased pressure index ($abs\{DEL\ 1(J)\}$) reaches the decreased pressure threshold value Th10 after the decreased pressure rate R of the tire exceeds the detection target $R_0$. In other words, decreased pressure alert is not output even though the pressure of the tire has decreased to alert level, and the decreased pressure alert cannot be output until the pressure of the tire has further decreased.

The slopes $a_0$ to $a_2$ described above can be also referred to as decreased pressure sensitivity of the decreased pressure index ($abs\{DEL\ 1(J)\}$) at the respective external temperatures. Through further examination, the inventors of the present invention have discovered that, when the external temperature $T_0$ is set as a reference external temperature and the slope $a_0$ is set as reference pressure sensitivity, the slope (decreased pressure sensitivity) "a" of the decreased pressure index ($abs\{DEL\ 1(J)\}$) when the external temperature is T can be approximated by Expression (5) below using a temperature correction coefficient "d" and reference decreased pressure sensitivity $a_0$.

$$a = a_0 + d \times (T - T_0) \qquad (5)$$

In other words, a ratio between the reference decreased pressure sensitivity $a_0$ under a condition of the reference external temperature $T_0$ and the decreased pressure sensitivity "a" under a condition of the external temperature T is proportional to a difference between the external temperatures $(T - T_0)$. FIG. 8 is a graph explaining this proportionality. As shown in FIG. 8, when the reference external temperature $T_0$ is set and the reference decreased pressure sensitivity $a_0$ with respect to $T_0$ is specified in advance, the temperature correction coefficient "d" can be specified by performing regression analysis based on numerous data sets of various external temperatures T and the decreased pressure sensitivity "a" obtained from, for example, actual or simulated vehicle experiments. Here, the reference external temperature $T_0$ can be the external temperature acquired by the outside air temperature sensor 7 when a test run is made to determine the decreased pressure threshold value Th10. Further, the reference decreased pressure sensitivity $a_0$ can be specified based on the value of $abs\{DEL\ 1(J)\}$ when the decreased pressure rate R of the tire becomes the detection target $R_0$ in the above-mentioned test run.

Through calculation of the decreased pressure sensitivity "a" in accordance with Expression (5), in accordance with Expression (6) below, the value of the decreased pressure index ($abs\{DEL\ 1(J)\}$ calculated under the condition of the external temperature T can be converted to the value of the decreased pressure index ($abs\{DEL\ 1(J)\}$) calculated under the condition of the reference external temperature $T_0$. The converted value of $abs\{DEL\ 1(J)\}$ can be also referred to as the corrected decreased pressure index DEL 1'(J) corrected in consideration of influence of the external temperature T. Through comparison of the corrected decreased pressure index DEL 1'(J) with the above-mentioned decreased pressure threshold value Th10, it can be more appropriately determined whether or not a tire has a decreased pressure.

$$\text{DEL } 1'(J) = abs\{DEL\ 1(J)\} \times a_0/a \qquad (6)$$

In the above description, there is exemplified a case in which pressure decrease of one tire and pressure decrease of three tires are detected through comparison between the corrected decreased pressure index DEL 1'(J) and the decreased pressure threshold value Th10. However, according to the examination of the inventors of the present invention, even in a case in which pressure decrease of two tires (No. 7 and No. 8 of Table 1) is detected, when R represents the decreased pressure rates of both of the tire $T_{FL}$ and the tire $T_{RR}$ or both of the tire $T_{RL}$ and the tire $T_{FR}$, a relation equivalent to Expression (4) and Expression (5) is established with the decreased pressure sensitivity as "h" and the temperature correction coefficient as "g". Accordingly, through comparison between the decreased pressure threshold value Th11 set under the condition of the reference external temperature $T_0$, and the corrected decreased pressure index DEL 1'(J) calculated in accordance with Expression (6), it can be more appropriately determine whether or not two-wheel pressure decrease (No. 7 and No. 8 of Table 1) occurs.

Moreover, a relation equivalent to Expression (4) and Expression (5) is also established with regard to a relation between the value of $abs\{DEL\ 2(J)\}$ and the decreased pressure rates R of both of the tire $T_{FL}$ and the tire $T_{FR}$ or both of the tire $T_{RL}$ and the tire $T_{RR}$. Similarly, a relation equivalent to Expression (4) and Expression (5) is also established with regard to a relation between the value of $abs\{DEL\ 3(J)\}$ and the decreased pressure rates R of both of the tire $T_{FL}$ and the tire $T_{RL}$ or both of the tire $T_{FR}$ and the tire $T_{RR}$. More specifically, under the condition of the reference external temperature $T_0$, between the decreased pressure rates R of two tires and the value of $abs\{DEL\ 2(J)\}$ or between the decreased pressure rates R of two tires and the value of $abs\{DEL\ 3(J)\}$, the following proportional relations expressed by Expression (7) and Expression (8) are established, respectively. $b_0$ in Expression (7) and $c_0$ in Expression (8) represent reference decreased pressure sensitivity of $abs\{DEL\ 2(J)\}$ and reference decreased pressure sensitivity of $abs\{DEL\ 3(J)\}$, respectively.

$$abs\{DEL\ 2(J)\} = b_0 \times R \qquad (7)$$

$$abs\{DEL\ 3(J)\} = c_0 \times R \qquad (8)$$

The slope (decreased pressure sensitivity) "b" of the decreased pressure index ($abs\{DEL\ 2(J)\}$) and the slope (decreased pressure sensitivity) "c" of the decreased pressure index ($abs\{DEL\ 3(J)\}$) when the external temperature is T can be calculated in accordance with Expression (9) and Expression (10) below, respectively. "e" in Expression (9) and "f" in Expression (9) are each the temperature correction coefficient and can be specified in advance by performing regression analysis based on numerous data sets.

$$b = b_0 + e \times (T - T_0) \qquad (9)$$

$$c = c_0 + f \times (T - T_0) \qquad (10)$$

In accordance with Expression (11) and Expression (12) below, the corrected decreased pressure index DEL 2 (J) and the corrected decreased pressure index DEL 3'(J), which are corrected in consideration of influence of the external temperature T, can be calculated.

$$DEL\ 2'(J) = abs\{DEL\ 2(J)\} \times b_0/b \qquad (11)$$

$$DEL\ 3'(J) = abs\{DEL\ 3(J)\} \times c_0/c \qquad (12)$$

Through comparison of the corrected decreased pressure index DEL 2'(J) with the decreased pressure threshold value Th21, it can be more appropriately determine whether or not pressure decrease of both of the tire $T_{FL}$ and the tire $T_{FR}$ or both of the tire $T_{RL}$ and the tire $T_{RR}$ occurs. Further, through comparison of the corrected decreased pressure index DEL 3'(J) with the decreased pressure threshold value Th31, it can be more appropriately determine whether or not pressure decrease of both of the tire $T_{FL}$ and the tire $T_{RL}$ or both of the tire $T_{FR}$ and the tire $T_{RR}$ occurs.

Referring back to FIG. 3, the correction unit 23 calculates any of the corrected decreased pressure indexes DEL 1'(J) to DEL 3'(J) in accordance with the decreased pressure index to be corrected, which is specified in Step S6 (Step S7). Through application of Expression (6), Expression (11), or Expression (12) above, any of the corrected decreased pressure indexes DEL 1'(J) to DEL 3 (J) can be calculated based on the external temperature T acquired in Step S2, and any of the decreased pressure indexes DEL 1(J) to DEL 3(J) calculated in Step S4. The reference external temperature $T_0$, the reference decreased pressure sensitivity $a_0$ to $c_0$, and $h_0$, and the temperature correction coefficients "d" to "g" are specified in advance in, for example, a test run prior to an actual run of the vehicle 1 and are stored in advance in the storage device 15 or the ROM 13.

Subsequently, through comparison of the corrected decreased pressure index calculated in Step S7 with the decreased pressure threshold value associated with this index, the decreased pressure determination unit 24 determines whether or not pressure decrease occurs in the pattern specified in Step S5 (Step S8). In this manner, it is determined whether or not the pressure of at least one of the tires $T_{FL}$, $T_{FR}$, $T_{RL}$, $T_{RR}$ decreases. Specifically, when the pressure decrease pattern specified in Step S5 is one of No. 1 to No. 4 and No. 11 to No. 14, the decreased pressure determination unit 24 compares the corrected decreased pressure index DEL 1'(J) with the decreased pressure threshold value Th10. When Th10 < DEL 1'(J), the decreased pressure determination unit 24 determines that the pressure decrease occurs (YES). When DEL 1'(J) < Th10, the decreased pressure determination unit 24 determines that the pressure decrease does not occur (NO). When the pressure decrease pattern specified in Step S5 is No. 7 or No. 8, the decreased pressure determination unit 24 compares the corrected decreased pressure index DEL 1'(J) with the decreased pressure threshold value Th11. When Th11 < DEL 1'(J), the decreased pressure determination unit 24 determines that the pressure decrease occurs (YES). When DEL 1'(J) < Th11, the decreased pressure determination unit 24 determines that the pressure decrease does not occur (NO). When the pressure decrease pattern specified in Step S5 is No. 5 or No. 10, the decreased pressure determination unit 24 compares the corrected decreased pressure index DEL 2'(J) with the decreased pressure threshold value Th21. When Th21 < DEL 2'(J), the decreased pressure determination unit 24 determines that the pressure decrease occurs (YES). When DEL 2'(J) < Th21, the decreased pressure determination unit 24 determines that the pressure decrease does not occur (NO). When the pressure decrease pattern specified in Step S5 is No. 6 or No. 9, the decreased pressure determination unit 24 compares the corrected decreased pressure index DEL 3'(J) with the decreased pressure threshold value Th31. When Th31 < DEL 3'(J), the decreased pressure determination unit 24 determines that the pressure decrease occurs (YES). When DEL 3'(J) ≤ Th31, the decreased pressure determination unit 24 determines that the pressure decrease does not occur (NO).

When it is determined in Step S8 that at least one of the tires $T_{FL}$, $T_{FR}$, $T_{RL}$, $T_{RR}$ has a decrease pressure (YES), Step S9 is executed. In Step S9, the decreased pressure alert unit 25 generates a decreased pressure alert informing the driver that a tire has a decreased pressure, and outputs this via the alert indicator 3 or the like. The alert may be a character indicating the decreased pressure of the tire, or may be an icon or a graphic determined in advance. Further, the decreased pressure alert may include a display informing that a wheel or an axle of the tire is believed to have a decreased pressure. Instead of or in addition to this, the decreased pressure alert unit 25 may be configured to generate the decreased pressure alert in the form of an audio, a buzzer sound, or the like and output the sound from, for example, a speaker of the vehicle 1. Meanwhile, when it is determined in Step S8 that the pressure decrease does not occur (NO), Step S9 is not executed, and Step S1 to S8 are executed again.

<3. Feature>

With the apparatus 2 for detecting decreased pressure according to the embodiment described above, even when the external temperature T deviates from the reference external temperature $T_0$ at the time of the decreased pressure determination and thus the decreased pressure sensitivity of the decreased pressure indexes (abs{DEL 1(J)}) to (abs{DEL 3(J)}) changes, pressure decrease can be determined based on any of the corrected decreased pressure indexes DEL 1(J)' to DEL 3(J)' from which influence of the change is eliminated. Thus, there can be avoided such a phenomenon that, for example, the decreased pressure alert is output even when the pressure of the tire does not actually decrease, or the pressure decrease is not detected even when the internal pressure of the tire reaches the detection target. Accordingly, the pressure decrease can be detected more appropriately.

<4. Modification>

While one embodiment of the present invention has been described above, the present invention is not limited to the embodiment described above, and various kinds of changes are allowed insofar as not departing from the gist of the present invention. For example, the following changes can be made. Moreover, the outline of the following modification can be appropriately combined.

(1) At least one of the decreased pressure indexes is only required to be an index for comparing the rotation speeds of the respective tires, and is not limited to the expressions defined in the embodiment described above. For example, DEL 1 to DEL 3 may be respectively defined by the following expressions.

$$DEL\ 1 = \{(V1 + V4)/2 - (V2 + V3)/2\}/\{(V1 + V2 + V3 + V4)/4\} \times 100\ (\%)$$

$$DEL\ 2 = \{(V1 + V2)/2 - (V3 + V4)/2\}/\{(V1 + V2 + V3 + V4)/4\} \times 100\ (\%)$$

$$DEL\ 3 = \{(V1 + V3)/2 - (V2 + V4)/2\}/\{(V1 + V2 + V3 + V4)/4\} \times 100\ (\%)$$

Further, DEL 1 to DEL 3 may be respectively defined by the following expressions.

$$DEL\ 1 = \{(V2 + V3)/(V1 + V4) - 1\} \times 100\ (\%)$$

$$DEL\ 2 = \{(V3 + V4)/(V1 + V2) - 1\} \times 100\ (\%)$$

$$DEL\ 3 = \{(V2 + V4)/(V1 + V3) - 1\} \times 100\ (\%)$$

(2) The apparatus for detecting decreased pressure according to the embodiment described above is not limited to a certain drive system of four-wheeled vehicles, and is also applicable to any FF vehicle, FR vehicle, MR vehicle, and 4WD vehicle. Further, the apparatus for detecting decreased pressure is not limited to four-wheeled vehicles, and is also applicable to three-wheeled vehicles, six-wheeled vehicles, or the like.

(3) The order of executing the respective steps of the decreased pressure detecting process according to the embodiment described above can be changed as appropriate. For example, Step S2 may be executed before Step S1, or at least one of Step S3 to Step S6 may be executed before Step S2. Further, Step S5 and Step S6 may be omitted. In this case, without specifying the decreased pressure index to be corrected, the corrected decreased pressure indexes DEL 1(J)' to DEL 3(J)' are calculated, and the corrected decreased pressure indexes are compared with the decreased pressure threshold values Th10, Th11, Th21, and Th31, respectively. Thus, it can be determined whether or not at least one of the tires has a decrease pressure.

(4) In the embodiment described above, based on the decreased pressure index (abs{DEL 1(J)}), (abs{DEL 2(J)}), or (abs{DEL 3(J)}), the correction unit 23 calculates the corrected decreased pressure index DEL 1(J)', DEL 2(J)', or DEL 3(J)' corrected in consideration of influence of the external temperature. However, the correction unit 23 may calculate, in place of the corrected decreased pressure index, a corrected decreased pressure threshold value Th10', Th11', Th21', or Th31' corrected in consideration of the influence of the external temperature. The corrected decreased pressure threshold values can be calculated based on the following expressions using the decreased pressure threshold values Th10, Th11, Th21 and Th31 preset under an environment of the reference temperature $T_0$, the external temperature T, and the temperature correction coefficients "d" to "g" in the embodiment described above.

$$Th10' = Th10 + d \times (T - T_0)$$

$$Th11' = Th11 + g \times (T - T_0)$$

$$Th21' = Th21 + e \times (T - T_0)$$

$$Th31' = Th31 + f \times (T - T_0)$$

The decreased pressure determination unit 24 compares the corrected decreased pressure threshold values with the decreased pressure indexes (abs{DEL 1(J)}) to (abs{DEL 3(J)}) that are not subjected to temperature correction, thereby being capable of determining the pressure decrease with the influence of the external temperature being eliminated. Specifically, the decreased pressure determination unit 24 can determine that at least one of the tires has a decreased pressure when any one of the following expressions is satisfied: Th10' < abs{DEL 1(J)}; Th11' < abs{DEL 1(J)}; Th21 '< abs{DEL 2(J)}; and Th31' < abs{DEL 3(J)}.

(5) The temperature correction coefficients "d" to "g" may slightly differ depending on, for example, types and sizes of the tires. Accordingly, the temperature correction coefficients "d" to "g" may be specified separately for each type and size of the tire. However, the present invention is not limited thereto. Uniform temperature correction coefficients "d" to "g" may be specified irrespective of types and sizes of the tires.

(6) The respective steps of the method for detecting decreased pressure according to the embodiment described above may be executed by a plurality of computers. That is, at least a part of Step S 1 to Step S9 may be executed by another external computer or the like to be connected to the apparatus 2 for detecting decreased pressure.

(7) The vehicle 1 may not be provided with the outside air temperature sensor 7, but may acquire the external temperature through information communication with other computers. For example, the apparatus 2 for detecting decreased pressure may be sometimes configured to receive a positioning signal from a satellite positioning system such as GPS so as to acquire information on the current position of the vehicle 1. In this case, the outside air temperature acquisition unit 21 may access an external server device that stores air temperature data at the current position of the vehicle 1 and acquire the external temperature from the server device.

LIST OF REFERENCE NUMERALS

| | |
|---|---|
| 1 | Vehicle |
| 2 | Apparatus for detecting decreased pressure |
| 20 | Speed acquisition unit |
| 21 | Outside air temperature acquisition unit |

| 22 | Decreased pressure index calculation unit |
|---|---|
| 23 | Correction unit |
| 24 | Decreased pressure determination unit |
| 25 | Decreased pressure alert unit |
| V1 | Rotation speed of left front wheel tire |
| V2 | Rotation speed of right front wheel tire |
| V3 | Rotation speed of left rear wheel tire |
| V4 | Rotation speed of right rear wheel tire |
| DEL 1 to DEL 3 | Decreased pressure index |
| DEL 1(J) to DEL 3(J) | Decreased pressure index |
| abs{DEL 1(J)} to abs{DEL 3(J)} | Decreased pressure index |
| DEL 1(J)' to DEL 3(J)' | Corrected decreased pressure index |
| d, e, f, g | Temperature correction coefficient |
| Th10, Th11, Th21, Th31 | Decreased pressure threshold value |

An apparatus for detecting decreased pressure of tire includes a speed acquisition unit, an outside air temperature acquisition unit, a decreased pressure index calculation unit, a correction unit, and a decreased pressure determination unit. The speed acquisition unit acquires rotation speeds of a plurality of tires mounted to a vehicle. The outside air temperature acquisition unit acquires an external temperature around the vehicle. The decreased pressure index calculation unit calculates at least one decreased pressure index as an index for comparing the rotation speeds of the plurality of tires. The correction unit calculates a corrected decreased pressure index corrected in consideration of influence of the external temperature, or calculates a corrected decreased pressure threshold value corrected in consideration of influence of the external temperature. The decreased pressure determination unit determines whether or not at least one tire among the plurality of tires has a decreased pressure.

## Claims

1. An apparatus (2) for detecting decreased pressure of tire, comprising:

   a speed acquisition unit (20) that is configured to acquire rotation speeds of a plurality of tires ($T_{FL}$, $T_{FR}$, $T_{RL}$, $T_{RR}$) mounted to a vehicle (1);
   an outside air temperature acquisition unit (21) that is configured to acquire an external temperature around the vehicle (1);
   a decreased pressure index calculation unit (22) that is configured to calculate at least one decreased pressure index as an index for comparing the rotation speeds of the plurality of tires ($T_{FL}$, $T_{FR}$, $T_{RL}$, $T_{RR}$) based on the rotation speeds;
   a correction unit (23) that is configured to calculate a corrected decreased pressure index corrected in consideration of influence of the external temperature based on the acquired external temperature and the calculated decreased pressure index, or calculates a corrected decreased pressure threshold value corrected in consideration of influence of the external temperature based on the acquired external temperature and a decreased pressure threshold value preset in accordance with the decreased pressure index for detecting pressure decrease; and
   a decreased pressure determination unit (24) that is configured to determine whether or not at least one tire among the plurality of tires ($T_{FL}$, $T_{FR}$, $T_{RL}$, $T_{RR}$) has a decreased pressure based on the corrected decreased pressure index and the preset decreased pressure threshold value, or determines whether or not at least one tire among the plurality of tires ($T_{FL}$, $T_{FR}$, $T_{RL}$, $T_{RR}$) has a decreased pressure based on the calculated decreased pressure index and the corrected decreased pressure threshold value.

2. The apparatus (2) for detecting decreased pressure of tire according to claim 1, wherein based on a coefficient representing a relation between a decreased pressure rate of the tire and the decreased pressure index under a condition of a reference external temperature serving as reference, the correction unit specifies a coefficient representing the relation under a condition of the acquired external temperature.

3. The apparatus (2) for detecting decreased pressure of tire according to claim 2, wherein the coefficient representing the relation between the decreased pressure rate of the tire and the decreased pressure index is a slope of a straight line in which the decreased pressure index is an objective variable and the decreased pressure rate of the tire is an explanatory variable.

**4.** The apparatus (2) for detecting decreased pressure of tire according to claim 3, wherein the correction unit (23) calculates the corrected decreased pressure index based on a ratio between the slope under the condition of the reference external temperature and the slope under the condition of the acquired external temperature.

**5.** The apparatus (2) for detecting decreased pressure of tire according to claim 1 or 2, further comprising a decreased pressure alert unit (25) that is configured to generate a decreased pressure alert when the decreased pressure determination unit has determined that the at least one tire has a decreased pressure.

**6.** A method for detecting decreased pressure of tire to be executed by one or a plurality of computers (12), comprising:

acquiring rotation speeds of a plurality of tires ($T_{FL}$, $T_{FR}$, $T_{RL}$, $T_{RR}$) mounted to a vehicle (1);
acquiring an external temperature around the vehicle (1);
calculating at least one decreased pressure index as an index for comparing the rotation speeds of the plurality of tires ($T_{FL}$, $T_{FR}$, $T_{RL}$, $T_{RR}$) based on the rotation speeds;
calculating a corrected decreased pressure index corrected in consideration of influence of the external temperature based on the acquired external temperature and the calculated decreased pressure index, or calculating a corrected decreased pressure threshold value corrected in consideration of influence of the external temperature based on the acquired external temperature and a decreased pressure threshold value preset in accordance with the decreased pressure index for detecting pressure decrease; and
determining whether or not at least one tire among the plurality of tires ($T_{FL}$, $T_{FR}$, $T_{RL}$, $T_{RR}$) has a decreased pressure based on the corrected decreased pressure index and the preset decreased pressure threshold value, or determining whether or not at least one tire among the plurality of tires ($T_{FL}$, $T_{FR}$, $T_{RL}$, $T_{RR}$) has a decreased pressure based on the calculated decreased pressure index and the corrected decreased pressure threshold value.

**7.** A program (9) for detecting decreased pressure of tire that causes one or a plurality of computers (12) to execute:

acquiring rotation speeds of a plurality of tires ($T_{FL}$, $T_{FR}$, $T_{RL}$, $T_{RR}$) mounted to a vehicle (1);
acquiring an external temperature around the vehicle (1);
calculating at least one decreased pressure index as an index for comparing the rotation speeds of the plurality of tires ($T_{FL}$, $T_{FR}$, $T_{RL}$, $T_{RR}$) based on the rotation speeds;
calculating a corrected decreased pressure index corrected in consideration of influence of the external temperature based on the acquired external temperature and the calculated decreased pressure index, or calculating a corrected decreased pressure threshold value corrected in consideration of influence of the external temperature based on the acquired external temperature and a decreased pressure threshold value preset in accordance with the decreased pressure index for detecting pressure decrease; and
determining whether or not at least one tire among the plurality of tires ($T_{FL}$, $T_{FR}$, $T_{RL}$, $T_{RR}$) has a decreased pressure based on the corrected decreased pressure index and the preset decreased pressure threshold value, or determining whether or not at least one tire among the plurality of tires ($T_{FL}$, $T_{FR}$, $T_{RL}$, $T_{RR}$) has a decreased pressure based on the calculated decreased pressure index and the corrected decreased pressure threshold value.

# Fig. 1

3

7

APPARATUS FOR
DETECTING DECREASED
PRESSURE

2

1

FL    FR

$T_{FL}$    $T_{FR}$

6    6

5

RL    RR

$T_{RL}$    $T_{RR}$

6    6

# Fig. 2

APPARATUS FOR DETECTING DECREASED PRESSURE
(CONTROL UNIT) — 2

CPU — 12

SPEED ACQUISITION UNIT — 20

OUTSIDE AIR TEMPERATURE ACQUISITION UNIT — 21

DECREASED PRESSURE INDEX CALCULATION UNIT — 22

CORRECTION UNIT — 23

DECREASED PRESSURE DETERMINATION UNIT — 24

DECREASED PRESSURE ALERT UNIT — 25

I/O INTERFACE — 11

STORAGE DEVICE — 15

RAM — 14

ROM — 13

PROGRAM — 9

3

6 6 6 6 7

8

# Fig. 3

START

ACQUIRE ROTATION SPEED
INFORMATION FROM WHEEL SPEED
SENSORS, AND CONVERT THEM TO
ROTATION SPEEDS V1 TO V4 — S1

ACQUIRE EXTERNAL TEMPERATURE
FROM OUTSIDE AIR TEMPERATURE
SENSOR — S2

CALCULATE DECREASED PRESSURE
INDEXES DEL 1 TO DEL 3 — S3

CALCULATE DECREASED PRESSURE
INDEXES DEL 1(J) TO DEL 3(J) — S4

SPECIFY POSSIBLE PRESSURE
DECREASE PATTERN — S5

NOT
APPLICABLE

SPECIFY DECREASED PRESSURE
INDEX TO BE CORRECTED — S6

CALCULATE CORRECTED
DECREASED PRESSURE
INDEX — S7

AT LEAST ONE TIRE
HAS A DECREASED
PRESSURE? — S8

NO

YES

GENERATE AND OUTPUT
DECREASED PRESSURE ALERT — S9

END

Fig. 4

Fig. 5

Fig. 6

## Fig. 7

$abs\{DEL1(J)\}$

$abs\{DEL1(J)\} = a_1 \times R$

$abs\{DEL1(J)\} = a_0 \times R$

$abs\{DEL1(J)\} = a_2 \times R$

Th10

$R_0$

$R(\%)$

## Fig. 8

$a$

$a_0$

$T_0$

$T(°C)$

Europäisches
Patentamt

European
Patent Office

Office européen
des brevets

# EUROPEAN SEARCH REPORT

**Application Number**

EP 24 15 5735

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 118 369 A (BOESCH MATHEW ALAN [US]) 12 September 2000 (2000-09-12) * column 2 - column 7; figures 1-6 * | 1-7 | INV. B60C23/06 |
| A | EP 0 808 731 B2 (TOYOTA MOTOR CO LTD [JP]) 16 August 2006 (2006-08-16) * paragraph [0031] - paragraph [0107]; figures 8-18 * | 1-7 | |

**TECHNICAL FIELDS SEARCHED (IPC)**

B60C

The present search report has been drawn up for all claims

| Place of search | Date of completion of the search | Examiner |
|---|---|---|
| Munich | 24 June 2024 | Billen, Karl |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 24 15 5735

This annex lists the patent family members relating to the patent documents cited in the above-mentioned European search report.
The members are as contained in the European Patent Office EDP file on
The European Patent Office is in no way liable for these particulars which are merely given for the purpose of information.

24-06-2024

| Patent document cited in search report | | Publication date | Patent family member(s) | | Publication date |
|---|---|---|---|---|---|
| US 6118369 | A | 12-09-2000 | DE | 19937596 A1 | 02-03-2000 |
| | | | GB | 2340648 A | 23-02-2000 |
| | | | US | 6118369 A | 12-09-2000 |
| EP 0808731 | B2 | 16-08-2006 | DE | 69714140 T2 | 28-11-2002 |
| | | | EP | 0808731 A2 | 26-11-1997 |
| | | | JP | 3300601 B2 | 08-07-2002 |
| | | | JP | H09309304 A | 02-12-1997 |
| | | | KR | 970074032 A | 10-12-1997 |
| | | | US | 5913241 A | 15-06-1999 |

EPO FORM P0459

For more details about this annex : see Official Journal of the European Patent Office, No. 12/82

**REFERENCES CITED IN THE DESCRIPTION**

**Patent documents cited in the description**

- JP 2020011651 A